# EUROPÄISCHE PATENTSCHRIFT

(11) **EP 0 905 011 B1**
(45) Veröffentlichungstag und Bekanntmachung des Hinweises auf die Patenterteilung: **09.06.2004**
(21) Anmeldenummer: 98117807.2
(22) Anmeldetag: 19.09.1998
(51) Int. Cl.: B62D 53/08

(54) **Fahrzeugrahmen**
Vehicle frame
Chassis de véhicule

(30) Priorität: 30.09.1997 DE 19743189
(43) Veröffentlichungstag der Anmeldung: 31.03.1999
(73) Patentinhaber: Jost-Werke GmbH & Co. KG, 60528 Frankfurt am Main (DE)
(72) Erfinder: Koetter, Stefan, 64546 Mörfelden-Walldorf (DE); Spitz, Rainer, 65347 Eltville (DE); Algüera Gallego, José Manuel, 63739 Aschaffenburg (DE); Emmann, Siegfried, 71384 Weinstadt (DE); Seidl, Wolfgang, 71672 Marbach (DE); Barz, Wolf-Rüdiger, 71336 Waiblingen-Neustadt (DE)
(74) Vertreter: Fuchs Mehler Weiss & Fritzsche

(56) Entgegenhaltungen:
- DE-A- 3 523 742
- DE-A- 4 322 716
- US-A- 2 778 657
- US-A- 4 697 844

## Beschreibung

Die Erfindung beuifft einen Fahrzeugrahmen insbesondere für Nutzfahrzeuge gemäß dem Obergebriff der Anspruchs 1.

In der DE-A-43 22 716 wird ein Fahrzeugrahmen beschrieben, an dem nach oben vorstehende Lagerböcke angeformt sind, die ein rundes Lagerrohr zum Durchstecken von Lagerbolzen aufweisen. Separate Lagerböcke, die auf dem Fahrzeugrahmen befestigt werden können, sind beispielsweise aus der DE-C-26 01 509 oder der DE-A-25 37 929 bekannt.

Die Sattelkupplung, die in der Kupplungsplatte entsprechende Öffnungen für die Aufnahme von Lagerbolzen aufweist, wird zunächst zu den Lagerböcken positioniert und anschließend mittels der Lagerbolzen in den Lagerböcken befestigt. Diese Montage ist aufwendig, weil insbesondere die Sattelkupplung zunächst bezüglich der Lagerböcke exakt ausgerichtet werden muß.

Ein weiteres Problem stellen die Fertigungstoleranzen des Fahrzeugrahmens dar. Die Rahmenteile, auf denen die Lagerböcke angeordnet sind, können unterschiedliche Abstände aufweisen, was Probleme bei der Montage und bezüglich der Stabilität der Sattelkupplung mit sich bringt.

Bekannte Lagerbuchsen haben außerdem den Nachteil, daß die Sattelkupplung oberhalb des Fahrzeugrahmens angeordnet ist. Um ein möglichst großes Ladevolumen bei den Aufliegern realisieren zu können, wird eine immer niedrigere Bauhöhe angestrebt, so daß auch die Sattelkupplung möglichst tief im Rahmen angeordnet sein muß. Die bekannten Lagerböcke stehen dieser Entwicklung entgegen. Nach oben vorstehende Lagerböcke müssen äußerst massiv ausgeführt sein, weil sie in allen drei Raumrichtungen unter Umständen gleichzeitig belastet werden. Entsprechend stabil ausgebildete Lagerböcke erhöhen zusätzlich das Fahrzeuggewicht.

Aus der DD-A-237 497 ist eine Lagefixierung und Verschubsicherung von Sattelplatten bekannt. An der Montageplatte für die Sattelkupplung sind Vorsprünge in Form von Noppen angebracht, die in entsprechende Eindrückungen in der Auflagefläche am Fahrgestell eingreifen. Es handelt sich um geschlossene Vertiefungen, um eine allseitige Verschubsicherung zu gewährleisten. Fertigungstoleranzen können nur bedingt ausgeglichen werden, wobei unterschiedliche Abstände der Längsträger nicht kompensiert werden können. Die Einbauhöhe der Sattelkupplung wird durch diese Maßnahmen nicht berührt.

Zur Absenkung der Sattelkupplung wird in der DE-C-35 23 742, die den Oberbegriff der Anspruchs 1 entspricht, vorgeschlagen, den Anlenkpunkt der Sattelkupplung heckseitig hinter der hinteren Starrachse des Zugfahrzeuges zu verlegen und den Fahrgestellrahmen heckseitig nach unten gekröpft auszubilden. Zur Befestigung wird jedoch eine Platte verwendet, die auf dem Rahmen angebracht wird, so daß die Schwenkachse oberhalb des gekröpften Rahmens liegt und somit die Vorteile der Tieferlegung der Sattelkupplung nicht voll ausgeschöpft werden. Wegen der nach hinten verlagerten Anordnung der Sattelkupplung geht diese Lösung zusätzlich auf Kosten der Fahrzeuglänge.

Aus der US-A-4,697,844 ist ein Fahrzeugrahmen bekannt, der die Tieferlegung der Sattelkupplung an beliebigen Stellen des Fahrzeugrahmens erlaubt. Ein herkömmlicher U-förmiger Rahmen wird zunächst in seiner Höhe gekürzt. Um die damit verbundene Schwächung des Rahmens zu kompensieren, sind allerdings mehrere Versteifungsplatten und Stützprofile erforderlich, so daß bei reduziertem Querschnitt eine ausreichende Stabilität gewährleistet werden kann.

Aufgabe der Erfindung ist es, einen Fahrzeugrahmen zu schaffen, der bei verbesserter Stabilität die Tieferlegung der Sattelkupplung in einfacherer Weise ermöglicht.

Diese Aufgabe wird mit einem Fahrzeugrahmen gemäß dem Anspruch 1 gelöst.

Vorteilhafte Ausgestaltungen werden in den Unteransprüchen beschrieben.

Die Erfindung geht von herkömmlichen Längsträgern aus, die in Fahrzeugen, insbesondere Nutzfarzeugen, verwendet werden und die dementsprechend eine große Stabilität aufweisen, um die über die Sattelkupplung eingeleiteten Kräfte aufnehmen zu können. Derartige Längsträger werden an der Stelle, wo die Sattelkupplung montiert werden soll, lediglich in einem kurzen Abschnitt an der Oberseite durch eine sich über die Rahmenbreite erstreckende Ausnehmung modifiziert, wodurch die Stabilität der Längsträger nicht beeinträchtigt wird. Es handelt sich um an den Seiten des jeweiligen Längsträgers offene Ausnehmungen, so daß die an der Sattelkupplung vorgesehenen Befestigungsmittel wie z.B. Lagerzapfen in Querrichtung der Längsträger zum Ausgleich von Fertigungstoleranzen bezüglich des Längsträgerabstandes justierbar sind. Bei zu engem Abstand der Längsträger können die Befestigungsmittel gegebenenfalls über die Ausnehmung hinaus seitlich überstehen. Die erfindungsgemäße Ausbildung des Rahmens ermöglicht einen unmittelbaren Einbau der Sattelkupplung ohne zusätzliche Montageplatte.

Die Ausnehmungen können durch einen Umformprozeß oder während eines Gießvorgangs, insbesondere eines Druckgießvorganges, in die Längsträger eingebracht werden.

Die Form der Ausnehmungen ist an die an der Sattelkupplung angebrachten Befestigungsmittel angepaßt, wobei vorzugsweise eine im Querschnitt runde, insbesondere kreisförmige oder elliptische Kontur gewählt wird. Möglich ist auch eine eckige Kontur.

Wenn beispielsweise eine Sattelkupplung montiert wird, die nach außen vorstehende Zapfen als Befestigungsmittel aufweist, so ist die Form der Ausnehmung an die Gestalt solcher Befestigungszapfen bzw. Lager zur Zapfenaufnahme angepaßt.

Über die Tiefe der Ausnehmung, die nur durch die Ausgestaltung des Rahmens und dessen Stabilität begrenzt wird, kann eine beliebige Tieferlegung der Sattelkupplung erreicht werden. Die Sattelkupplung kann so weit nach unten verlegt werden, daß sie im Extremfall nur geringfügig nach oben gegenüber der Oberseite der Längsträger vorsteht, so daß die Längsträger die Bewegung des Aufliegers nicht beeinträchtigen. Es kann somit eine optimale Raumausnutzung erzielt werden, wobei die Tiefe der Ausnehmungen an die jeweilige Bauform und insbesondere an die an den Sattelkupplungen angeordneten Befestigungsmittel angepaßt sein muß.

Bei der Montage der Sattelkupplung wird diese von oben auf den Rahmen abgesenkt, so daß die Befestigungsmittel, z.B. die Zapfen, in die Ausnehmungen eingreifen können. Anschließend werden mittels mindestens eines Halteelementes die Befestigungsmittel und somit die gesamte Sattelkupplung am Fahrzeugrahmen fixiert.

Die Ausnehmungen erleichtern die Montage der Sattelkupplung insofern, als sich beim Absenken die Sattelkupplung von selbst justiert. Fertigungstoleranzen des Fahrzeugrahmens, die sich beispielsweise in unterschiedlichen Trägerabständen äußern können, beeinträchtigen die Montage nicht, weil Abweichungen in horizontaler Richtung durch die an der Sattelkupplung angeordneten Befestigungsmittel in Verbindung mit den offenen Ausnehmungen ausgeglichen werden können. Der erfindungsgemäße Rahmen erlaubt daher eine erhebliche Verkürzung der Montagezeit.

Ein weiterer Vorteil des Rahmens besteht darin, daß die von der Sattelkupplung kommenden Kräfte unmittelbar in die Längsträger eingeleitet werden, so daß die Stabilität des Rahmens vollständig genutzt werden kann.

Das Halteelement kann vorzugsweise eine Schelle, Halbschelle oder eine Lagerkappe sein. Eine solche Lagerkappe ist ein topförmiges Bauteil, dessen Innenkontur an die Form des an der Sattelkupplung angeordneten Befestigungsmittels angepaßt ist und das vor der Montage der Sattelkupplung auf die Befestigungsmittel aufgesetzt wird. Die Außenkontur der Lagerkappe ist an die Gestalt der Ausnehmungen angepaßt.

Nach dem Absenken der Sattelkupplung braucht lediglich die vormontierte Lagerkappe auf dem jeweiligen Längsträger befestigt zu werden.

Vorzugsweise ist in die Lagerkappe eine Buchse mit einer Kugelfläche eingesetzt.

Beispielhafte Ausführungsformen der Erfindung werden nachfolgend anhand der Zeichnungen näher erläutert. Es zeigen:
- Fig. 1: eine perspektivische Darstellung eines Hinterachsteilrahmens,
- Fig. 2: die Draufsicht auf den in Fig. 1 gezeigten Rahmen mit montierter Sattelkupplung,
- Fig. 3: einen Schnitt längs der Linie III-III durch die in Fig. 2 gezeigte Lagerstelle,
- Fig. 4: die Seitenansicht einer Lagerstelle mit einer Lagerkappe, und
- Fig. 5: einen Schnitt längs der Linie V-V durch die in der Fig. 4 gezeigte Lagerkappe.

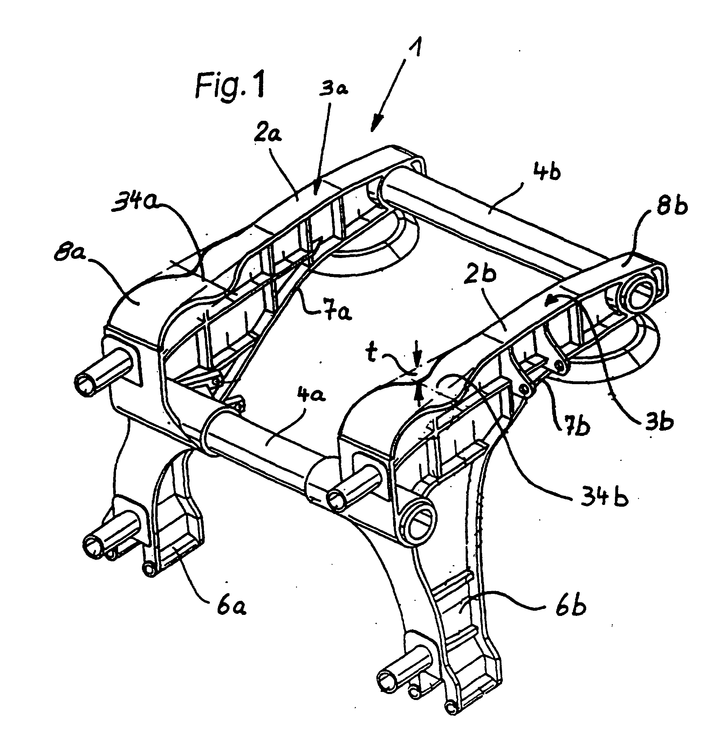

In der Fig. 1 ist ein Fahrzeugrahmen 1 perspektivisch dargestellt, dessen tragenden Bauteile im Bereich der Hinterachse durch die beiden durch Querträger 4a,b miteinander verbundenen seitlichen hinteren Längsträger 2a,b gebildet werden. Die Längsträger 2a,b sind als Schmiede- oder Druckgußteile, vorzugsweise aus einem Leichtmetall hergestellt. In der Seitenansicht sind die Längsträger 2a,b L-förmig mit Schenkeln 6a,b und 7a,b, wobei der in Vertikalrichtung verlaufende Schenkel 6a,b einerseits die einfache Befestigung des Längslenkers in der Längslenkeraufnahme und andererseits die vertikal beabstandete Anordnung von den die Funktion des Längsträgers übernehmenden Bauteilen erlaubt.

Zwischen den horizontalen Schenkeln 7a,b der Längsträger 2a,b befindet sich ein Freiraum zur Aufnahme einer Sattelkupplung. Zur Befestigung der nicht dargestellten Sattelkupplung weisen die horizontalen Schenkel 7a,b der Längsträger 2a,b auf jeweils gegenüberliegenden Seiten eine Ausnehmung 34a,b auf, die in der hier gezeigten Ausführungsform halbkreisförmig ausgebildet ist. Die oberseitige Rahmenplatte 8a,b der Längsträger 2a,b ist zur Ausbildung der Ausnehmungen 34a,b nach unten eingezogen bzw. nach unten verformt ausgebildet.

Die Tiefe t der Ausnehmung 34a,b ist an die Bauform der Sattelkupplung bzw. an die an der Sattelkupplung angeordneten Befestigungsmittel angepaßt. Im Vergleich zur Rahmenstärke ist die Tiefe t vergleichsweise gering, so daß die Stabilität der Längsträger 2a,b durch die Ausnehmungen 34a,b nicht beeinträchtigt wird. Als Vorteil kommt hinzu, daß die Ausnehmungen 34a,b in der hier gezeigten Ausführungsform im Bereich der vertikalen Schenkel 6a,b angeordnet sind, so daß sich die Ausnehmungen 34a,b in einem besonders stabilen Bereich der Längsträger 2a,b befinden.

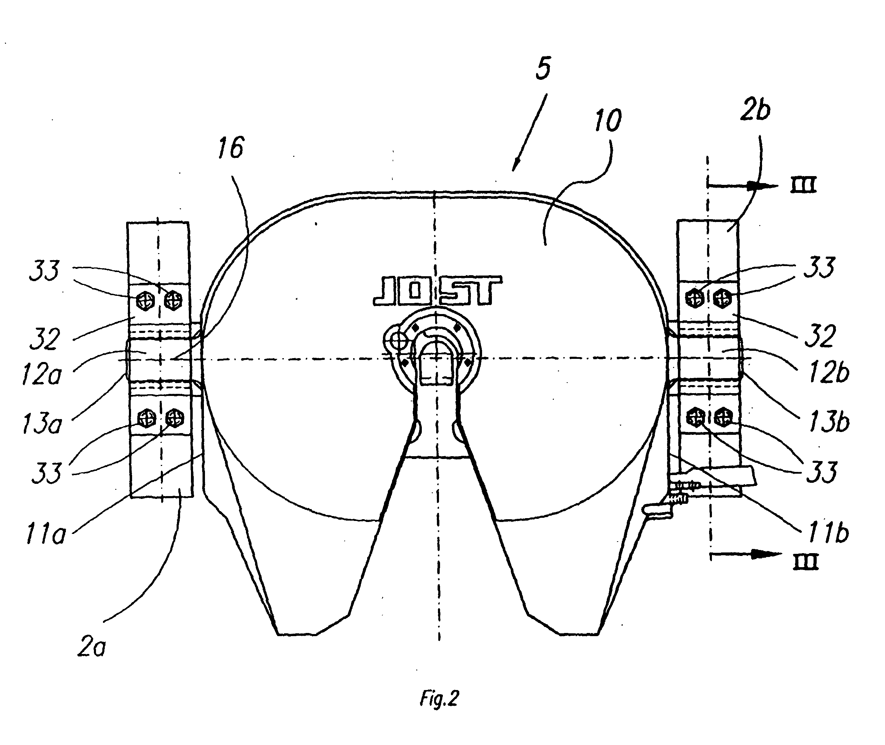

In der Fig. 2 ist die Draufsicht auf den in Fig. 1 gezeigten Fahrzeugrahmen mit eingebauter Sattelkupplung 5 zu sehen. Die Sattelkupplung 5, von der im wesentlichen die Kupplungsplatte 10 dargestellt ist, ist eine herkömmliche Sattelkupplung und nicht Gegenstand der Erfindung, so daß auf eine detaillierte Beschreibung verzichtet werden kann.

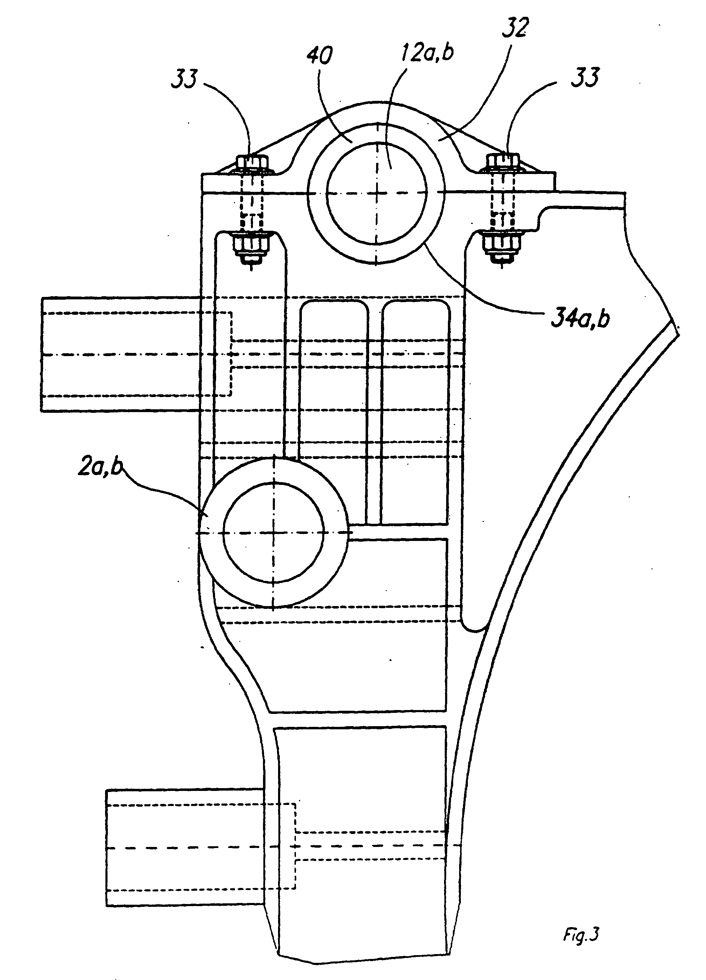

Die Sattelkupplung 5 besitzt an den beiden gegenüberliegenden Seitenflächen 11a,b nach außen vorstehende Lagerzapfen 12a,b, die in der hier gezeigten Ausgestaltung zylinderförmig ausgebildet sind. Die Lagerzapfen 12a,b greifen bei der Montage, wie in der Fig. 3 ausschnittweise dargestellt ist, in die Ausnehmung 34a,b ein, deren Kontur an die Gestalt der Lagerzapfen 12a,b angepaßt ist. Mittels einer Halbschelle 32 sowie den Schrauben 33 werden die Lagerzapfen 12a,b auf den Längsträgern 2a,b befestigt. Damit die Sattelkupplung 5 im Betrieb um ihre horizontale Achse ohne großen Aufwand geschwenkt werden kann, sind die Lagerzapfen 12a,b zusätzlich noch mit einer Buchse 40 versehen. Diese Buchse kann vorzugsweise aus einem Kunststoffmaterial bestehen, das besonders gute Gleiteigenschaften aufweist. Vorzugsweise werden Buchsenmaterial und Zapfenmaterial im Hinblick auf eine gute Gleitpaarung aufeinander abgestimmt. Fertigungstoleranzen können je nach Materialwahl durch die Buchse ausgeglichen werden.

Die Länge der Lagerzapfen 12a,b ist an die Breite der Längsträger 2a,b und somit an die Länge der Ausnehmungen 34a,b angepaßt. In der Darstellung der Fig. 2 stehen die Lagerzapfen 12a,b geringfügig mit ihren Stirnflächen 13a,b gegenüber der Außenseite der Längsträger 2a,b nach außen vor. Fertigungstoleranzen, wie z.B. unterschiedliche Abstände der Längsträger 2a,b werden durch die Lagerzapfen 12a,b insofern ausgeglichen, als diese dann möglicherweise nicht über die gesamte Länge der Ausnehmungen 34a,b aufliegen.

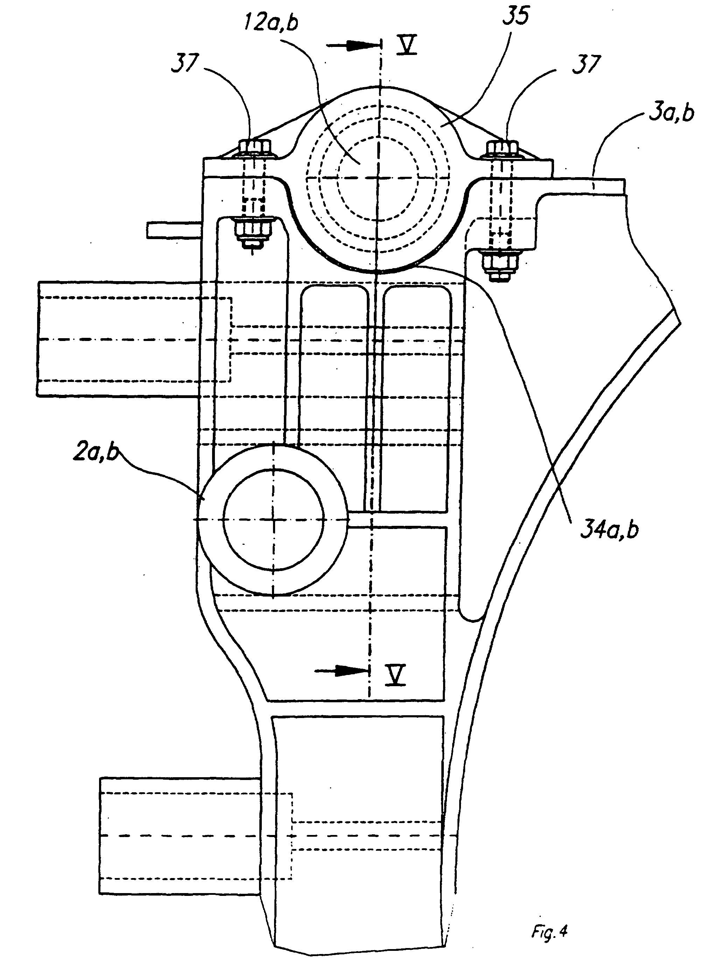

In der Fig. 4 ist eine weitere Ausführungsform der Lagerstelle dargestellt. Die Ausnehmungen 34a,b im Längsträger 2a,b sind ebenfalls halbkreisförmig ausgebildet. Im Gegensatz zu der Ausführungsform in den Fign. 1 bis 3 liegt der Lagerzapfen bzw. die auf dem Lagerzapfen befindliche Buchse nicht unmitelbar in der Ausnehmung 34a,b auf, sondern es ist eine Lagerkappe 35 vorgesehen, deren Außenkontur an die Gestalt der Ausnehmungen 34a,b angepaßt ist. Die Lagerkappe 35 ist mittels Schrauben 37 auf der Oberseite 3a,b der Längsträger 2a,b befestigt.

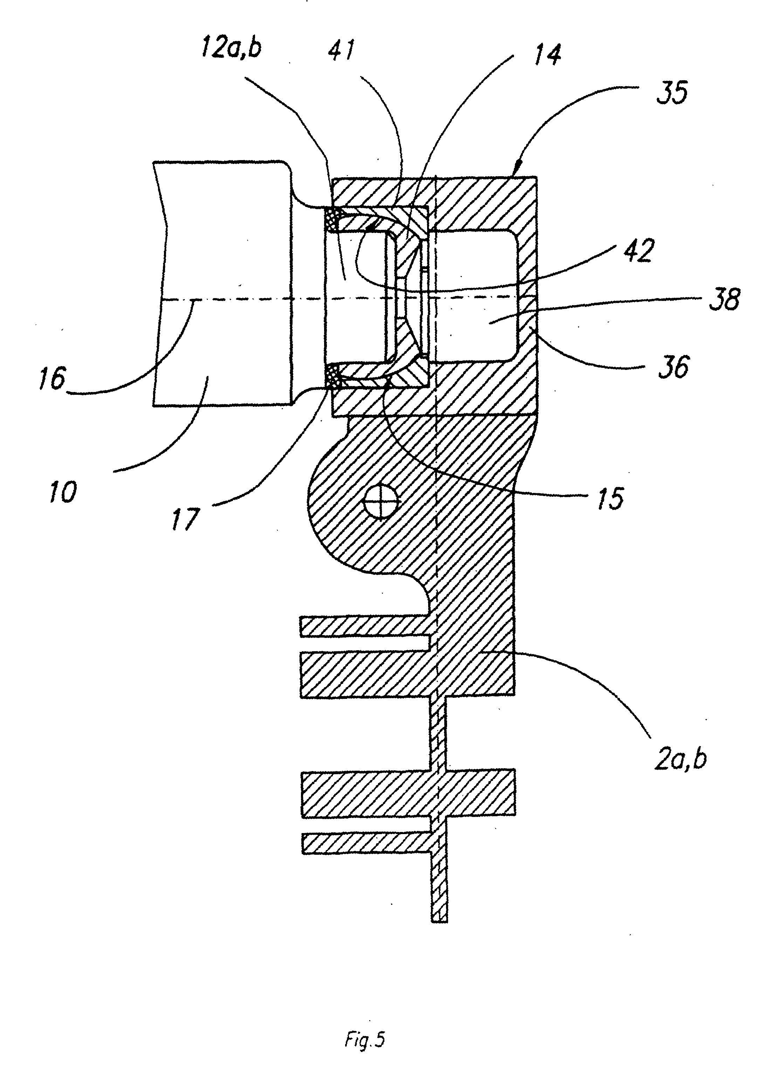

In der Fig. 5 ist ein Schnitt längs der Linie V-V durch die in Fig. 4 gezeigte Darstellung zu sehen. Von der Sattelkupplung 5 ist lediglich der angeformte Lagerzapfen 12a,b dargestellt. Auf dem zylindrischen Lagerzapfen 12a,b befindet sich ein Fließpreßteil 14 mit einer kalottenförmigen Außenfläche. Innerhalb der Lagerkappe 35 befindet sich eine Buchse 41 mit einer an das Fließpreßteil angepaßten kalottenförmigen Innenoberfläche 42. Diese kalottenförmigen Flächen bieten die Möglichkeit, Fertigungstoleranzen ausgleichen zu können, wobei für die Buchse vorzugsweise ein Kunststoffmaterial wie z.B. Polyoxymethylen verwendet wird. Um das Eindringen von Schmutz in den Lagerbereich zu verhindern, ist eine Dichtung 17 vorgesehen.

Die in der Fig. 5 gezeigte Anordnung von Lagerkappe 35 und Lagerzapfen 12a,b ist so gewählt, daß die Stirnfläche 13a,b nicht an der Stirnwand 36 der Lagerkappe 35 anliegt, so daß die Schwenkbewegung der Sattelkupplung 5 um die horizontale Achse 16 nicht behindert wird. Vielmehr ist in der gezeigten Ausführungsform ein zusätzlicher Freiraum 38 zu sehen, der für die Lagerung eines entsprechend ausgebildeten Lagerzapfens genutzt werden kann.

### Bezugszeichen

- 1: Fahrzeugrahmen
- 2a, b: Längsträger
- 3a, b: Oberseite
- 4a, b: Querträger
- 5: Sattelkupplung
- 6a, b: vertikale Schenkel
- 7a, b: horizontale Schenkel
- 8a, b: Rahmenplatte
- 10: Kupplungsplatte
- 11a, b: Seitenfläche
- 12a, b: Lagerzapfen
- 13a, b: Stirnfläche
- 14: Fließpreßteil
- 15: Kalottenfläche
- 16: horizontale Achse
- 17: Dichtring
- 32: Halbschelle
- 33: Schraube
- 34a, b: Ausnehmung
- 35: Lagerkappe
- 36: Stirnwand
- 37: Schraube
- 38: Freiraum
- 40: Buchse
- 41: Buchse
- 42: kalottenförmige Fläche

## Patentansprüche

1. Rahmen für Fahrzeuge, insbesondere für Nutzfahrzeuge, mit zwei sich in Fahrzeuglängsrichtung erstreckenden, parallelen Längsträgern (2a,b) und mit Mitteln zum Befestigen einer Sattelkupplung (5) auf den Längsträgern, wobei die Befestigungsmittel an der Oberseite (3a,b) der Längsträger (2a,b) befindliche über die gesamte Rahmenbreite verlaufende, Ausnehmungen (34a,b) sowie jeweils mindestens ein auf dem Längsträger (2a,b) befestigtes Halteelement (32,33,35,38) umfassen, **dadurch gekennzeichnet, daß** das Halteelement lösbar auf dem Längsträger (2a,b) befestigt ist und die Ausnehmungen (34a,b) einen unmittelbaren Einbau der Sattelkupplung ohne zusätzliche Montageplatte erlauben.

2. Fahrzeugrahmen nach Anspruch 1, **dadurch gekennzeichnet, daß** die Ausnehmungen (34a,b) durch einen Umformprozeß in die Längsträger (2a,b) eingebracht sind.

3. Fahrzeugrahmen nach Anspruch 1 oder 2, **dadurch gekennzeichnet, daß** die Ausnehmungen (34a,b) während eines Gießvorgangs in die Langsträger (2a,b) eingebracht sind.

4. Fahrzeugrahmen nach einem der Ansprüche 1 bis 3, **dadurch gekennzeichnet, daß** die Ausnehmungen (34a,b) im Querschnitt eine runde Kontur aufweisen.

5. Fahrzeugrahmen nach Anspruch 4, **dadurch gekennzeichnet, daß** die Ausnehmungen (34a,b) im Querschnitt kreisförmig oder elliptisch sind.

6. Fahrzeugrahmen nach einem der Ansprüche 1 bis 3, **dadurch gekennzeichnet, daß** die Ausnehmungen (34a,b) im Querschnitt eine eckige Kontur aufweisen.

7. Fahrzeugrahmen nach einem der Ansprüche 1 bis 6, **dadurch gekennzeichnet, daß** das Halteelement eine Schelle (32) ist.

8. Fahrzeugrahmen nach einem der Ansprüche 1 bis 6, **dadurch gekennzeichnet, daß** das Halteelement eine einen Lagerzapfen (12a,b) einer Sattelkupplung (5) umgreifende Lagerkappe (35) ist.

9. Fahrzeugrahmen nach Anspruch 8, **dadurch gekennzeichnet, daß** die Innenkontur der Lagerkappe (35) an die Gestalt des Lagerzapfens (12a,b) und die Außenkontur an die Form der Ausnehmung (34a,b) angepaßt sind.

10. Fahrzeugrahmen nach Anspruch 9, **dadurch gekennzeichnet, daß** in die Lagerkappe (35) eine Buchse (40, 41) mit einer Kalotten- oder einer Kugelfläche (42) eingesetzt ist.

## Claims

1. Frame for vehicles, in particular for commercial vehicles, having two parallel longitudinal carriers (2a, b) which extend in the longitudinal direction of the vehicle, and having means for fixing a saddle-like connection (5) to the longitudinal carriers, the fixing means comprising recesses (34a, b) which are located at the upper side (3a, b) of the longitudinal carriers (2a, b) and which extend over the entire width of the frame, and in each case at least one holding element (32, 33; 35, 37) which is fixed to the longitudinal carrier (2a, b), **characterised in that** the holding element is releasably fixed to the longitudinal carrier (2a, b) and the recesses (34a, b) allow the saddle-like connection to be assembled directly without any additional mounting plate.

2. Vehicle frame according to claim 1, **characterised in that** the recesses (34a, b) are formed in the longitudinal carriers (2a, b) by means of a shaping process.

3. Vehicle frame according to claim 1 or 2, **characterised in that** the recesses (34a, b) are formed in the longitudinal carriers (2a, b) during a casting operation.

4. Vehicle frame according to any one of claims 1 to 3, **characterised in that** the recesses (34a, b) have a round contour in cross-section.

5. Vehicle frame according to claim 4, **characterised in that** the recesses (34a, b) are circular or elliptical in cross-section.

6. Vehicle frame according to any one of claims 1 to 3,
**characterised in that** the recesses (34a, b) have an angular contour in cross-section.

7. Vehicle frame according to any one of claims 1 to 6, **characterised in that** the holding element is a clamp (32).

8. Vehicle frame according to any one of claims 1 to 6, **characterised in that** the holding element is a bearing cap (35) which surrounds a bearing journal (12a, b) of a saddle-like connection (5).

9. Vehicle frame according to claim 8, **characterised in that** the inner contour of the bearing cap (35) is adapted to the structure of the bearing journal (12a, b) and the outer contour is adapted to the shape of the recess (34a, b).

10. Vehicle frame according to claim 9, **characterised in that** a sleeve (40, 41) having a face in the form of a spherical segment or a spherical face (42) is inserted into the bearing cap (35).

## Revendications

1. Châssis pour véhicule, en particulier pour un véhicule utilitaire avec deux longerons (2a, b) parallèles, s'allongeant dans le sens longitudinal du véhicule, et avec des moyens pour fixer une platine d'attelage (5) sur les longerons, dans lequel les moyens de fixation enserrent des empreintes (34a, b) se trouvant sur la face supérieure (3a, b) des longerons (2a, b) et s'étendant sur l'ensemble de la largeur du châssis, ainsi que respectivement au moins un élément de maintien (32, 33 ; 35, 37) fixé sur les longerons (2a, b), **caractérisé en ce que** les éléments de maintien sont fixés de manière amovible sur les longerons (2a, b) et que les empreintes (34a, b) autorisent une installation immédiate de la platine d'attelage sans plaque de montage supplémentaire.

2. Châssis de véhicule selon la revendication 1, **caractérisé en ce que** les empreintes (34a, b) sont intégrées dans les longerons (2a, b) par un procédé de déformation.

3. Châssis de véhicule selon la revendication 1 ou 2, **caractérisé en ce que** les empreintes (34a, b) sont intégrées dans les longerons (2a, b) au cours d'un processus de moulage.

4. Châssis de véhicule selon l'une des revendications 1 à 3, **caractérisé en ce que** les empreintes (34a, b) comportent un contour arrondi en coupe transversale.

5. Châssis de véhicule selon la revendication 4, **caractérisé en ce que** les empreintes (34a, b) sont circulaires ou elliptiques en coupe transversale.

6. Châssis de véhicule selon l'une des revendications 1 à 3, **caractérisé en ce que** les empreintes (34a, b) comportent un contour anguleux en coupe transversale.

7. Châssis de véhicule selon l'une des revendications 1 à 6, **caractérisé en ce que** l'élément de maintien est un collier (32).

8. Châssis de véhicule selon l'une des revendications 1 à 6, **caractérisé en ce que** l'élément de maintien est un boîtier (35) ajusté sur un tenon (12a, b) d'une platine d'attelage (5).

9. Châssis de véhicule selon la revendication 8, **caractérisé en ce que** le contour interne du boîtier (35) est adapté à la forme du tenon (12a, b) et que son contour externe est adapté à la forme de l'empreinte (34a, b).

10. Châssis de véhicule selon la revendication 9, **caractérisé en ce qu'**un coussinet (40, 41) muni d'une surface en forme de calotte ou de rotule (42) est utilisée dans le boîtier (35).
